Europäisches Patentamt

European Patent Office

Office européen des brevets

(11) Publication number: **0 146 522**
A2

# EUROPEAN PATENT APPLICATION

(21) Application number: 84870164.5

(22) Date of filing: 04.12.84

(51) Int. Cl.⁴: **G 01 D 5/26**, G 01 K 11/18

(30) Priority: 07.12.83 US 558828

(43) Date of publication of application: 26.06.85 Bulletin 85/26

(84) Designated Contracting States: BE CH DE FR GB IT LI NL

(71) Applicant: **Monsanto Company, Patent Department 800 North Lindbergh Boulevard, St. Louis Missouri 63167 (US)**

(72) Inventor: **Fisher, William Keith, 50 Concord Street, New Britain Connecticut 06053 (US)**
Inventor: **Walker, George Edward, 21 Maple Road, Longmeadow Massachusetts 01106 (US)**

(74) Representative: **McLean, Peter, Monsanto Europe S.A. Patent Department Avenue de Tervuren 270-272 Letter Box No 1, B-1150 Brussels (BE)**

(54) Polymeric/optical sensing apparatus and method.

(57) An optical sensing device which incorporates a suitable optical sensor system, preferably a fiber optics system, with a suitable environmental sensitive polymeric material is presented. The polymeric material must be of the type which undergoes changes in optical properties in response to environmental changes. Accordingly, preferred polymers include crosslinked, semicrystalline polymers, high strength amorphous polymers, and polymer blends. This novel combination will accurately and, at times, reversibly measure and detect temperature, humidity, pressure, position, radiation, flow, stress/strain, light, color, electric field, and a plurality of other properties with respect to changes in the environment.

0146522
16-21(5024)

## POLYMERIC/OPTICAL SENSING APPARATUS AND METHOD
### BACKGROUND OF THE INVENTION

This invention relates generally to an optical sensing method and device therefore. More particularly, this invention relates to a new and improved optical sensing method and device which incorporates a suitable optical sensor system, preferably a fiber optic system with an environmental sensitive polymeric material which undergoes changes in optical properties in response to environmental changes. This novel polymeric/optical sensor combination will accurately and at times reversibly measure and detect temperature, humidity, pressure, position, radiation, flow, strain/stress, light, color, electric field, and a plurality of other properties with respect to changes in the environment.

Optical sensors and particularly fiber optical sensing devices have found increasing use and acceptance. Recently, fiber optics technology has undergone phenomenal growth in various facets of industry, medicine, and communications. In fact, new applications for fiber optics are emerging daily for a variety of reasons. For example, unlike conventional wire transmission devices, light transmitting fiber optic systems employing glass, plastic or similar fibers are immune to radio frequency interference and electromagnetic interference. They are inert to hazardous or extreme environments and are not affected by temperatures from cryogenic levels to several hundred degrees Centigrade. Also, difficult to reach and normally inaccessible areas are easily penetrated by the small size and flexibility of fiber optic systems.

As a result, fiber optics are finding great success in the process control and automation areas. Since the fibers do not conduct electricity, they are immune to electrical interference, require no expensive shielded cable and provide very high accuracy. This high accuracy translates into improved reliability over mechanical and/or electronic sensors.

As already discussed, fiber optic systems have shown great promise in the fields of sensors and detectors for sensing a multitude of environmental and other properties. While some of these properties can be detected with known and conventional fiber optical devices, certain environmental phenomena require combining fiber optics with other secondary materials or devices. Accordingly, U.S. Patent No. 4,215,285 describes a device for measuring a plurality of environmental properties which combines fiber optic techniques with a variety of phosphor compounds. For example, when measuring temperature, the object or environment to be measured is provided with a layer of phosphor material that when excited to luminescence emits detectable radiation within two or more distinct wavelength ranges that are optically isolatable from one another. The relative intensity of the emission in these wavelength ranges will vary in a known manner as a function of the temperature of the phosphor. The complexity of detecting these distinct wavelengths creates certain drawbacks in the phosphor detector devices. Accordingly, the complexity results in very high manufacture costs which severely limits the practical use of the fiber optics/phosphor system.

Similarly, other types of sensing devices which have combined both an optical system and other secondary materials or devices have been utilized such as bimetallic strips where the reflected light will be a function of the movement of the strip with temperature, piston movement resulting from gas or liquid expansion in an enclosed chamber, and flexible diaphragm movement for pressure measurements. Unfortunately, all are plagued with a variety of problems. Chief among these problems is a complexity of design and manufacture which results in high labor costs as well as greater chance for component malfunction.

Obviously, a material which can be combined with a fiber optics system and which can observe, monitor and detect environmental (i.e., temperature, humidity, pressure, etc.) changes during continual operations with accurate reproducibility would be highly advantageous. One well known class of materials which is capable of changing its optical properties as a function of temperature, humidity, etc., is organic polymeric materials, especially semicrystalline, crosslinked, high strength amorphous polymers, and such polymers with additives. For example, during heating and cooling, semicrystalline polymers undergo a well-known predictable and repeatable transformation of optical properties. Similarly, when exposed to solvent materials, polymers often undergo crazing which also affects the optical properties of the polymer. Surprisingly, despite these desirable and peculiar characteristics of polymers, the use of polymeric materials as a sensing medium in a fiber optic light transmitting assembly has heretofore not been practiced in the prior art.

Accordingly, it is a principle object of the present invention to provide a sensing medium to be used in conjunction with a suitable optical sensor system which overcomes the deficiencies of the prior art.

It is another object of the present invention to provide an organic environmental sensitive polymeric material, which undergoes changes in optical properties in response to environmental changes, in combination with a fiber optic light transmitting assembly to sense and/or detect changes in certain environmental properties.

It is still another object of the present invention to provide a semicrystalline and crosslinked polymeric material, which undergoes a transition in light or wave energy transmission at its melting point for use in indicating temperature change in optical sensors, preferably fiber optical sensors.

It is still another object of the present invention to combine a suitable environmental sensitive polymeric material with an optical sensor, preferably a fiber optical sensor to measure and detect changes in the relative humidity of the surrounding environment.

It is yet another object of the present invention to combine a suitable polymeric material, preferably a semicrystalline polymer in combination with an optical sensor, preferably a fiber optical sensor, to measure and detect changes in a multitude of environmental properties including, but not limited to, pressure, stress/strain, solubility, radiation, direction, position, flow, sound, acceleration, light, color and electrical field.

DESCRIPTION OF THE DRAWINGS

These and other objects will become more apparent from the following detailed description taken in connection with the accompanying drawings wherein:

FIGURE 1 is a curve of strength versus temperature for a typical semicrystalline polymer;

FIGURE 2 schematically illustrates in general the polymeric/optical sensor of the present invention;

FIGURE 3 schematically illustrates a polymeric/optical sensor for rotating objects in accordance with the present invention;

FIGURE 4 schematically illustrates a polymeric/optical sensor for moving objects in accordance with the present invention;

FIGURE 5 schematically illustrates a polymeric/optical sensor for large areas in accordance with the present invention;

FIGURE 6 is a curve of output versus temperature for a typical polycaprolactone derived in accordance with the present invention;

FIGURE 7 is an analog temperature response of a modified polyvinylchloride derived in accordance with the present invention;

FIGURE 8 schematically illustrates a polymeric/optical sensor for humidity in accordance with the present invention;

FIGURE 8A is a partially enlarged view of a section of FIGURE 8.

FIGURE 9 schematically illustrates another embodiment of a polymeric/optical sensor for temperature in accordance with the present invention.

## DESCRIPTION OF THE PREFERRED EMBODIMENT

In accordance with the present invention, a novel sensing device capable of detecting plural environmental properties is essentially comprised of a suitable organic environmental sensitive polymer material, which can be either a semicrystalline or an amorphous polymer, with or without additives, combined with a suitable optical sensor means, preferably a fiber optic sensor means. The utilization of an environmental sensitive polymeric material provides a predictable and sometimes reversible change in optical properties which can be easily adapted to monitoring by conventional fiber optic sensors.

It is well known to those skilled in the art that polymers undergo predictable and sometimes reversible changes in opacity in relation to or as a consequence of a number of environmental conditions. This well known phenomenon is peculiar to polymers and polymer blends and, in fact, is one of the reasons that such materials have gained such a prevalent role in domestic and commercial applications. The present invention utilizes this knowledge by combining a suitable environmental sensitive polymer material with a fiber optics system. Thus, the changes in opacity of polymeric materials may be easily detected by optical sensors such as fiber optics to provide a heretofore unknown but extremely useful and needed hybrid sensor or monitor which is the essence of the present invention.

As mentioned, the polymer/optical sensor of the present invention may be utilized for measuring a variety of environmental properties. A critical requirement of the polymer used in the present invention is that it undergoes optical transformation within the electromagnetic wavelengths associated with ultraviolet, visible and infra red light. Thus, an optical sensor system in accordance with this invention will function within a light wavelength range of from about 100 to about 13,000 angstroms. The following detailed discussion of the manner in which particular environmental properties are detected will include some, but not all of the many properties to which the present invention is applicable. It will be understood to those skilled in the art that the present invention encompasses the measurement of any environmental property which utilizes the novel and synergistic combination of polymeric materials and an optical sensor such as a fiber optic sensor.

Temperature:

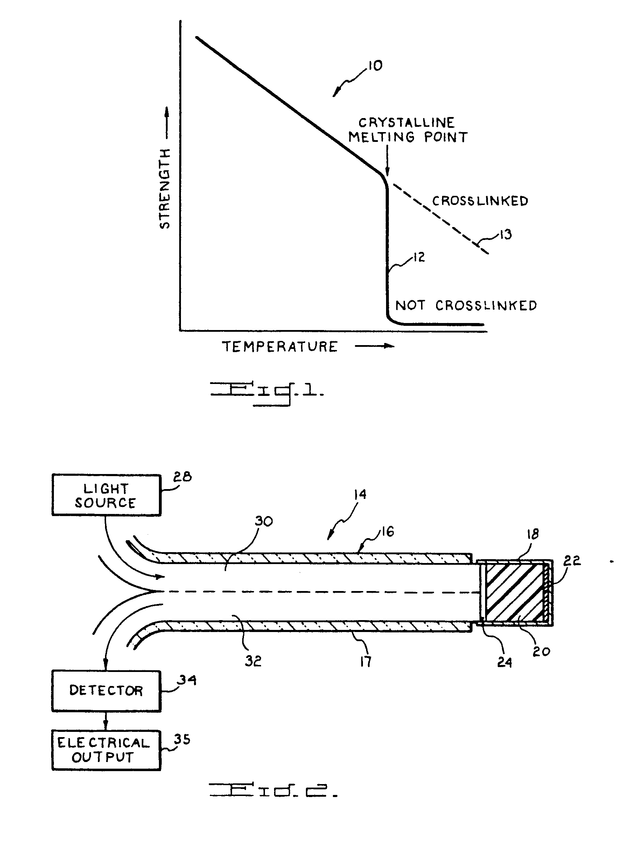

The optical/polymeric sensor of the present invention is particularly well suited for use as a temperature sensor. Referring to FIGURE 1, a graph of strength versus temperature for a typical crosslinked semicrystalline polymer is shown at 10. It is well known that as the temperature rises, a polymer of this type will consistently pass through a "melting temperature (Tm)" at its crystalline melting point. In this transition temperature range, the wave energy transmission will change resulting in a corresponding change in opacity (i.e., the polymer will go from opaque to clear as the temperature rises). By tailoring specific polymers and polymer blends, the specific Tm may be altered to almost any desired temperature. For example, optical/ polymeric sensor which comprises a polymer blend or mixture will exhibit a wide range of melting points due to the miscibility of the components. This miscibility changes with temperature and will consequently indicate temperature increases and decreases. Also, the solubilization of an additive in a polymer matrix will yield different levels of light or wave energy transmission as a function of temperature. Accordingly, additives that change opacity in response to environmental changes can be blended with polymers, and such systems are considered as being a part of the environmental sensitive polymeric materials of the present invention. For example, a conventional paraffin wax, cerol or oil in amounts of up to 80% by weight have been found to be compatible with a polymer matrix such as ethylene vinyl acetate for reversible temperature sensing.

Crosslinking is very important as far as reproducibility, predictability and reversibility of the sensor system. Crosslinking provides a stable form which prevents the polymer from, for example, migration or flow during repeated melt cycles. It is possible or probable that most non-crosslinked polymers would not offer these novel reversible characteristics as these non-crosslinked materials are more likely to flow out of the light path of the fiber optics. The flow characteristics of uncrosslinked polymers are clearly shown by reference numerals 12 and 13 in FIGURE 1 wherein the non-crosslinked polymer 12 has low strength and can undergo molecular flow and deformation. Conversely, the crosslinked polymer 13 retains a stable form even at high temperatures.

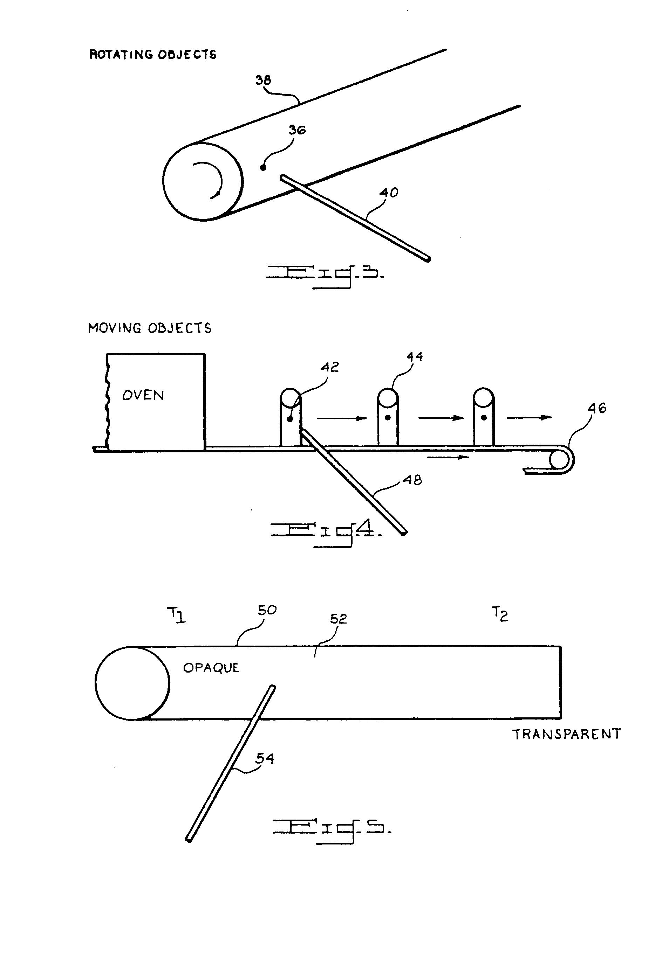

In FIGURE 2, a view of one embodiment of a polymeric/optical sensor or fuse of the present invention suitable for temperature measurement is diagrammatically shown. The fuse 14 typically consists of fiber optic sensor means which includes a bifurcated fiber optic probe 16 of conventional construction enclosed in a protective sheath 17 which is inserted into a housing or sleeve 18. The housing 18 contains a semicrystalline polymer 20 and a reflective surface 22. The housing 18 will generally be in contact with the specimen whose temperature is to be measured. The reflective surface 22, polymer 20 and fiber optic probe 16 are all separated by gap 24. The gap 24 will act to compensate for expansion of the polymer during heating. The fiber optic sensor means further includes an infra red (IR) light source 28 and a detector means 34. Light from the light source 28 is fed through the transmitting bundle 30 of fibers to the polymeric material 20 and is passed therethrough to the reflecting surface 22. Reflected light then passes back through the polymer 20, subsequently emerging therefrom and is then passed through a receiving bundle 32 of fibers and into detector means 34 wherein the light energy is converted into an electrical output 35.

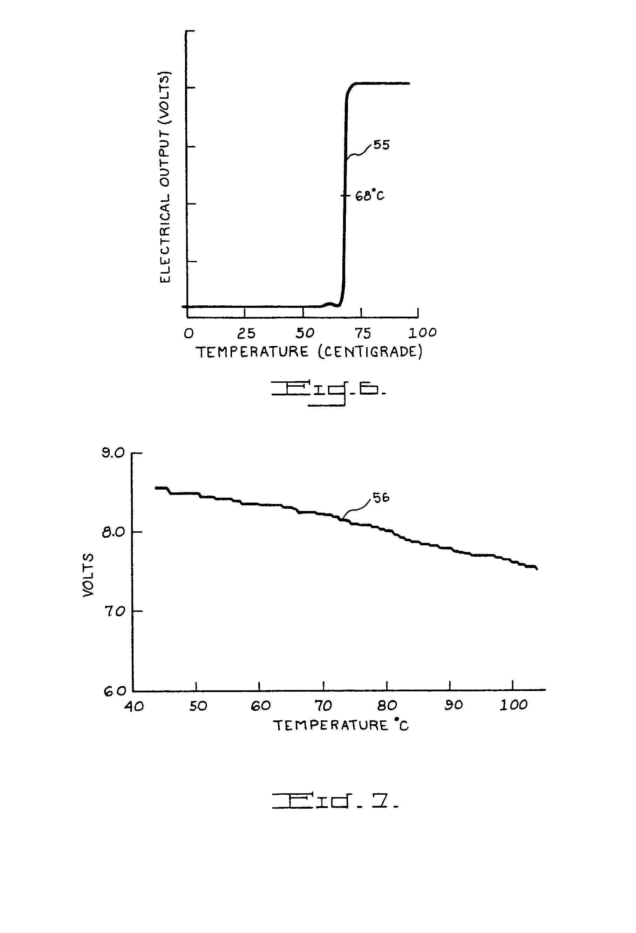

Non-contact temperature measurement can also be achieved using methods and devices as depicted in FIGURES 3-5. In FIGURE 3, an appropriate temperature responsive polymeric material is applied as a coating or film 36 to a rotating object 38 (i.e., shaft, roll, etc.). Changes in temperature are then recorded in a similar manner as described above by the bifurcated fiber optic cable 40.

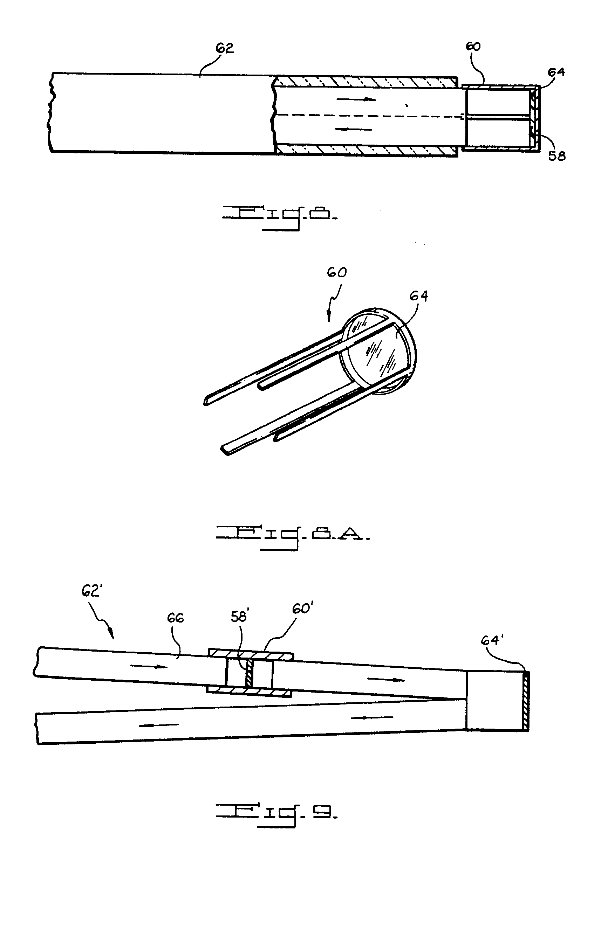

Similarly, moving objects, for example, objects undergoing heat treating along a belt, are also susceptible to temperature monitoring by the polymeric/optical sensor of the present invention. In FIGURE 4, an appropriate temperature responsive coating or film 42 is applied to a moving object 44 situated on a moving belt 46 after undergoing heat treatment. A fiber optics cable 48 then registers temperature change as described heretofore.

Finally, in FIGURE 5, a large area of an object 50 (i.e., pipe) has been coated with a temperature responsive polymeric film 52. As the surface temperature of the film rises from $T_1$ to $T_2$, the opacity of the polymer changes accordingly and is detected by the fiber optics sensor 54.

Presently, two general types of temperature detectors have shown excellent potential for industrial and other uses. The first general type comprises a temperature sensor or switch which will accurately detect a desired temperature at the melting temperature (Tm) or response temperature ($T_r$) of the particular polymer or polymer blend respectively. In effect, the fiber optics is used to "watch" the change in opacity of polymers at their individual melting points. Thus, as the temperature of the environment to be measured rises, the polymer undergoes a predictable and reversible transition in structure with a corresponding change in opacity. This change in opacity is monitored by the light source of the fiber optics, converted to an electrical output and then easily read by a human or automated operator. Many different polymeric materials have been tested to determine suitability for use in this embodiment of the present invention. Important factors in selecting a particular polymer include the temperature range of the melting phenomenon (i.e., slope of curve 10 in FIGURE 1), degree of crosslinking, and degree of crystallinity. The following Example I is a typical test.

## EXAMPLE I

The experimental set-up was similar to that shown in FIGURE 2. The housing or sleeve 18 was constructed of brass and had an inner diameter of 0.125-0.129 inch, a wall thickness of 0.010 inch and a length of about 0.480 inch. The housing was then attached to the 0.125 inch diameter fiber optics probe 16 via a friction fit. The polymer 20 consisted of a 0.030 inch thick sample of 100% polycaprolactone which had been E-beam treated to 10 megarads to effect desired crosslinking. A 0.005 inch aluminum reflector sheet 22 was employed. Finally, the gas between the probe end and the polymer sample was about 0.025 inch. The probe end was inserted into a controlled heater block. Temperature was monitored by a thermometer and thermocouple which were also inserted in the heater block. An infrared light source (light-emitting diode) was fed through the transmitting bundle 30 of fibers to the polycaprolactone and was passed therethrough to the reflecting surface 22.   Reflected light then passed back through the polymer and into a photo diode detector whereupon the light was converted to an electrical signal (voltage).   A recorder simultaneously measured the voltage from the detector relative to the rising temperature from the thermocouple.

FIGURE 6 shows the temperature response ($T_r$) curve for the 100% polycaprolactone sample, the average temperature response taken over a series of runs being about 68°C.   FIGURE 6 is a plot of electrical output in volts versus temperature.   Note that the almost vertical slope of the curve 55 corresponds to the Tm of the sample (about 68°C.).   The narrow temperature range and vertical slope exhibited by the polycaprolactone sample is indicative of a semicrystalline and crosslinked polymer capable of accurate temperature sensing.   Without crosslinking, the sample flowed and was not usable.   Typical curves have been determined for other polymers with the response at a "fuse" or response temperature ($T_r$) being recorded as illustrated in the polycaprolactone example.   The $T_r$ for other polymers tested are as follows:

| Polymeric Material | Tm |
|---|---|
| Polypropylene | 163°C. |
| Poly 1.4 butylene adipate | 58°C. |
| Polyethylene oxide | 63.5°C. |
| Polyethylene adipate | 49°C. |

In the case of an environmental sensitive polymeric material which is a blend of 70 parts paraffin wax (55°C. melting point) and 30 parts ethylene vinyl acetate polymer, the $T_r$ was 56°C.

A second general type of temperature direction as opposed to the just discussed "switch" or "fuse" type is the analog response of light transmission versus temperature which has been discovered in, for example, rubber modified polyvinyl chloride (PVC) systems. A typical analog temperature response is shown in FIGURE 7 and is a graph of light transmission converted into an electrical response (voltage) versus temperature in degrees centigrade for a rubber modified PVC. It has been theorized that the opacity of the rubber modified PVC blend increases as a result of the correspondingly increasing difference in refractive indices of the two components. In other words, the refractive index changes at a faster rate for the rubber since it is above its Tg. While the refractive index also changes for the PVC, this change is at a slower rate since it is a glassy (below Tg) polymer. The increasing difference in refractive index with increasing temperature results in increased opacity of the polymer sensor and therefore decreased light output as shown in FIGURE 7.

HUMIDITY:

The polymer/optical sensor of the present invention is also well suited for use in monitoring humidity. Water absorption levels are extremely high (greater than 2.0%) for some polymers (i.e., polyvinyl butyral, nylons, etc). This absorbed water is known to change the light transmission properties of the polymer/water systems. Similarly, it is known that hygroscopic salts or additives in polymers will increase the water uptake and cause changes in light transmission. The water absorption levels are directly related to relative humidity of the surrounding environment.

Humidity measurements may be accomplished by a method and apparatus as shown in FIGURES 8 and 8A, wherein a plastic sensor 58 is formed as a thin film or molded part which is capable of achieving rapid equilibrium water levels. Referring to FIGURE 8, the housing 60 should preferably be a case-like holder as shown in FIGURE 8A which would easily permit the free passage of moisture laden air to reach the polymer sensor 58. As with the temperature sensor, a bifurcated fiber optics sensor 62 is attached to the housing 60. Thus, as the light travels from an IR source (not shown), it is passed through the polymer sensor of sample 58, reflected off of reflector 64 and passed back through the fiber optics to be eventually converted into electric impulses and analyzed. While one particular apparatus for measuring humidity in a polymer/optical sensor has been described in FIGURES 8 and 8A, obviously any other suitable apparatus may be used.

In view of the above discussion, it is clear that polymer/optical sensors which are capable of undergoing changes in opacity or optical properties in response to environmental changes in combination with a conventional fiber optics device are aptly suited for handling a multitude of monitoring and sensing operations.

Stress:

For example, polymers are known to exhibit birefringence patterns when stressed. A fiber optic cable with a secondary environmental sensitive device comprised of a suitable polymer is contemplated wherein polarized light is used as the light source. Thus, a stress or pressure change will provide a changed birefringence pattern and result in an appropriate electrical signal.

Radiation:

Similarly, dosimeters or sensors for solar radiation and ionizing radiation may also be constructed from a polymer/optical combination, since it is well known that certain polymers degrade when exposed to radiation. This degradation may be a surface change or a bulk polymer color change. Both types of degradation will give an identifiable change in light transmission in a fiber optic sensor system.

Solvents:

It is also well known that certain polymers will craze when they are attacked by solvents. This crazing causes significantly reduced light transmission due to light scattering. In early experiments, an injected molded polystyrene sensor (0.100 inch thickness) was positioned below a bifurcated fiber optics probe provided with a reflective backing to give a reading of 0.46 (full scale voltage output of 1.0). Acetone was subsequently applied to the polymer sample wherein the light transmission was decreased to 0. The housing surrounding the polymer sample should probably be similar to the housing 60 used in the humidity sensor. These solvent sensors as heretofore described would find excellent utility in detecting spills, leaks, gas concentrations, etc.

Finally, the polymer/optical sensor of the present invention is well suited for detecting any number of other environmental properties including, but not limited to, direction, position, flow, sound, acceleration, light, color and electric field.

It will be understood that while the present invention has the novel advantage which has heretofore not been found in the prior art of reversibly detecting temperature and humidity, some environmental properties will not be repeatable without providing a new polymer sample. For example, radiation (sunlight) and crazing from solvents will irreversibly degrade the polymer.

It should also be understood that while the present invention has been described in terms of using a fiber optics system as the optical sensing apparatus, other suitable optical devices would work equally as well including, but not limited to, lasers, sunlight, and other light sources combined with visual, light sensitive film and the like as detectors.

While preferred embodiments have been shown and described, various modification and substitutions may be made thereto without departing from the spirit and scope of the invention. Accordingly, it is to be understood that the present invention has been described by way of illustration and not limitation.

What is claimed is:

1. A device for detecting environmental changes comprising:

fiber optic sensor means; and

an environmental sensitive polymeric material capable of undergoing a change in optical properties in response to a change in the environment, said environmental sensitive polymeric material communicating with said optical sensor means and said environment whereby a change in the environment which causes said optical change in the said polymeric material is sensed and indicated by said fiber optic sensor means.

2. The device of Claim 1 wherein said environmental sensitive polymeric material undergoes reversible changes in optical properties in response to said change in the environment.

3. The device of Claim 1 wherein said environmental sensitive polymeric material is a semicrystalline polymeric material.

4. The device of Claim 1 wherein said environmental sensitive polymeric material is a crosslinked polymeric material.

5. The device of Claim 1 wherein said environmental sensitive polymeric material is a high strength amorphous polymeric material.

6. The device of Claim 1 wherein said environmental sensitive polymeric material is a blend of an organic polymer and an additive which is a member of the group consisting of a wax, a cerol and an oil.

7. The device of Claim 6 wherein said additive is a wax.

8. The device of Claim 1 wherein said environmental sensitive polymeric material is a polymeric material selected from the group consisting of polycaprolactone, polypropylene, poly 1.4 butylene adipate, polyethylene oxide, polyethylene adipate, rubber modified polyvinylchloride and a wax extended ethylene vinyl acetate.

9. The device of Claim 1 wherein said fiber optic sensor means includes:

a fiber optic cable having at least one first light transmitting fiber and at least one second light transmitting fiber;

a housing for said environmental sensitive polymeric material and for receiving the ends of said first and second light transmitting fibers;

light source means connected to said first light transmitting fiber; and

light detecting means connected to said second light transmitting fiber, said environmental sensitive polymeric material being disposed in said housing so that the light from said light source means carried by said first light transmitting fiber passes through said environmental sensitive polymeric material to said second light transmitting fiber.

10. The device of Claim 9 including a gap between the ends of said fibers and said environmental sensitive polymeric material.

11. The device of Claim 10 including converter means connected to said light detecting means whereby light from said light source is converted into electrical output.

12.  The device of Claim 9 wherein said housing includes a reflector, said reflector and the ends of said fibers being disposed on opposite sides of said environmental sensitive polymeric material whereby light from said first light transmitting fiber passes through said environmental sensitive polymeric material and is reflected back through said polymeric material to said second light transmitting fiber.

Fig.1.

Fig.2.

0146522

ROTATING OBJECTS

Fig.3.

MOVING OBJECTS

OVEN

Fig.4.

$T_1$  50   52   $T_2$

OPAQUE

TRANSPARENT

Fig.5.

Fig.6.

Fig.7.

Fig.8.

Fig.8A.

Fig.9.